# EUROPÄISCHE PATENTSCHRIFT

(11) **EP 1 990 856 B1**
(45) Veröffentlichungstag und Bekanntmachung des Hinweises auf die Patenterteilung: **23.01.2013**
(21) Anmeldenummer: 08154294.6
(22) Anmeldetag: 10.04.2008
(51) Int. Cl.: H01M 8/02, H01M 8/12, H01M 8/24, H01M 4/86

(54) **Verfahren zum Herstellen von Kontakten zwischen elektrochemisch aktiven Scheiben und Interkonnektoren in Hochtemperatur-Brennstoffzellen**
Method for creating contacts between electrochemically active discs and interconnectors in high-temperature fuel cells
Procédé destiné à la fabrication de contacts entre des disques électrochimiques actifs et des interconnecteurs dans des cellules de combustibles à haute température

(30) Priorität: 09.05.2007 EP 07107780
(43) Veröffentlichungstag der Anmeldung: 12.11.2008
(73) Patentinhaber: Hexis AG, 8404 Winterthur (CH)
(72) Erfinder: Iwanschitz, Boris, 8404 Winterthur (CH); Sfeir, Josef, 8180 Bülach (CH); Weissen, Ueli, 8406 Winterthur (CH); Kaiser, Andreas, Dr., 4000 Roskilde (DK)
(74) Vertreter: Sulzer Management AG

(56) Entgegenhaltungen:
- EP-A1- 0 714 147
- WO-A-98/40921
- DE-A1- 4 237 602
- US-A1- 2007 003 819

## Beschreibung

Die Erfindung betrifft ein Verfahren zum Herstellen von Kontakten zwischen elektrochemisch aktiven Scheiben und Interkonnektoren in planaren Hochtemperatur-Brennstoffzellen. Sie bezieht sich auch auf Eine Brennstoffzellenbatterie mit solchen Kontaktierungen. Die Brennstoffzellen sind Festoxidbrennstoffzellen (SOFC, Solid Oxid Fuel Cells), die bei Temperaturen zwischen 700°C und 950°C arbeiten. Der Interkonnektor trennt eine Luft- von einer Gasseite und stellt eine elektrische Verbindung zwischen benachbarten Brennstoffzellen her.

Eine Batterie von planaren Brennstoffzellen umfasst einen Stapel von Zellen, in dem alternierend plattenförmige Interkonnektoren und elektrochemisch aktive Scheiben, sogenannte PEN-Elemente (Scheiben mit drei Lagen: Positive Elektrode - Elektrolyt - Negative Elektrode), angeordnet sind. Die Interkonnektoren werden auch als bipolare Platte bezeichnet. Sie vermitteln diskrete Kontakte in Form von Noppen oder Stegen wischer den Elektroden benacharter PEN-Elemente. Die Noppen bilden beispielsweise ein spezielles Muster, in dem die Noppen alle die gleiche Form haben und eine rasterförmige Anordnung mit einer Dichte von mindestens 10 Noppen pro cm² bilden. Für einen guten Wirkungsgrad der Brennstoffzellenbatterie mit minimalen ohmschen Verlusten ist eine gleichmässige, geringen elektrischen Widerstand aufweisende Kontaktierung der PEN-Elemente mit den Interkonnektoren erforderlich. Nach einem bekannten Verfahren wird die Kontaktschicht aus einer Paste hergestellt, die ein Gemisch aus einem pulverförmigen, elektrisch leitenden Material und einer Flüssigkeit ist (siehe z.B. US-A- 2007/0003819 mit dem Titel "Electrically Conductive Fuel Cell Contact Material"). Ein solches Kontaktiergemisch kann mitte s Siebdruck, Schlickerspritzen oder Schlickerrollen auf die Elektroden oder auf durch die Noppen bzw. Stege gebildete Kontaktflächen aufgetragen werden. Nach einem Zusammenbau der Zellen zu einem Stapel ergeben sich durch Trocknen und Brennen aus dem Kontaktiergemisch feste Verbindungen zwischen den Kontaktflächen und den Elektroden. Bei dieser Montage wird die aufgetragene Paste feucht gehalten, um Höhenunterschiede der Noppen und Stege ausgleichen zu können. Es hat sich nun aber gezeigt, dass die Montage des Zellenstapels zu teilweise ungenügend ausgebi deten, inhomogenen Verbindungen führen. Aufgrund dieses Mangels werden an den Zellen eines montierten Stapels Zellenspannungen gemessen, die verschieden gross sind und die ohmsche Verluste bedeuten, die nicht optimal sind. Eine Verkleinerung der Toleranzen bei der Fertigung der Interkonnektoren kommt aus Kostengründen nicht in Frage.

Eine Hochtemperatur-Brennstoffzelle und eine Brennstoffzellenbatterie mit einer derartigen Kontaktierung ist in EP 0 714 147 A1 beschrieben.

Aufgabe der Erfindung ist es, ein Verfahren zum Herstellen von Kontakten zwischen elektrochemisch aktiven Scheiben und interkonnektoren zu schaffen, bei dem die Kontaktierung verbessert ist. Diese Aufgabe wird durch das im Anspruch 1 definierte Verfahren gelöst.

Das Verfahren dient zum Herstellen von Kontakten zwischen elektrochemisch aktiven Scheiben und Interkonnektoren in planaren Hochtemperatur-Brennstoffzellen. Die Interkonnektoren weisen luftseitige und gasseitige Oberflächenprofile mit Kontaktflächen auf, die sich auf Erhebungen befinden. Die Erhebungen jedes Oberflächenprofils spannen mit den Kontaktflächen angenähert eine Ebene auf. Dabei liegen Abweichungen innerhalb einer vorgegebenen Toleranz. Bei diesem Verfahren wird jeweils auf Elektroden der elektrochemisch aktiven Scheiben oder auf die Kontaktfläche eine Schicht aufgetragen, die aus einem Kontaktiergemisch besteht. Das Kontaktiergemisch enthält elektrisch leitende Partikel und ein die Partikel einbettendes Medium. Die Oberflächenprofile bzw. die Elektroden werden mit der aufgetragenen Schicht so in Berührung gebracht, dass bei einer Arbeitstemperatur die Erhebungen in diese Schicht eindringen. Zwischen den Kontaktflächen und den elektrisch leitenden Partikeln werden so Verbindungen ausgebildet und damit diskrete, homogen strukturierte Verbindungen zwischen den Kontaktflächen und den Elektroden. Schliesslich wird unter thermischen Teilbehandlungen das die Partikel einbettende Medium entfernt und die diskreten Verbindungen verfestigt. Das die Partikel einbettende Medium ist eine Heissschmelzmasse, die bei Raumtemperatur und insbesondere bei einer Temperatur unter 40 °C fest ist. Bei der genannten Arbeitstemperatur befindet sich die Heissschmelzmasse in einem flüssigen oder plastischen Zustand.

Die abhängigen Ansprüche 2 bis 8 betreffen vorteilhafte Ausführungsformen des erfindungsgemässen Verfahrens. Eine Brennstoffzellenbatterie mit erfindungsgemäss hergestellten Kontaktierungen ist Gegenstand der Ansprüche 9 und 10.

Nachfolgend wird die Erfindung anhand der Zeichnungen erläutert. Es zeigen:
- Fig. 1: einen Querschnitt durch einen Interkonnektor und zwei angrenzende elektrochemisch aktive Scheiben, die gemäss der Erfindung mit dem Interkonnektor kontaktiert sind,
- Fig. 2: eine Vergrösserung eines Oberflächenprofils des Interkonnektors und
- Fig. 3: ein Diagramm mit Zellspannungen eines Stapels von Zellen, in denen eine Kontaktierung gemäss dem Stand der Technik durchgeführt worden ist.

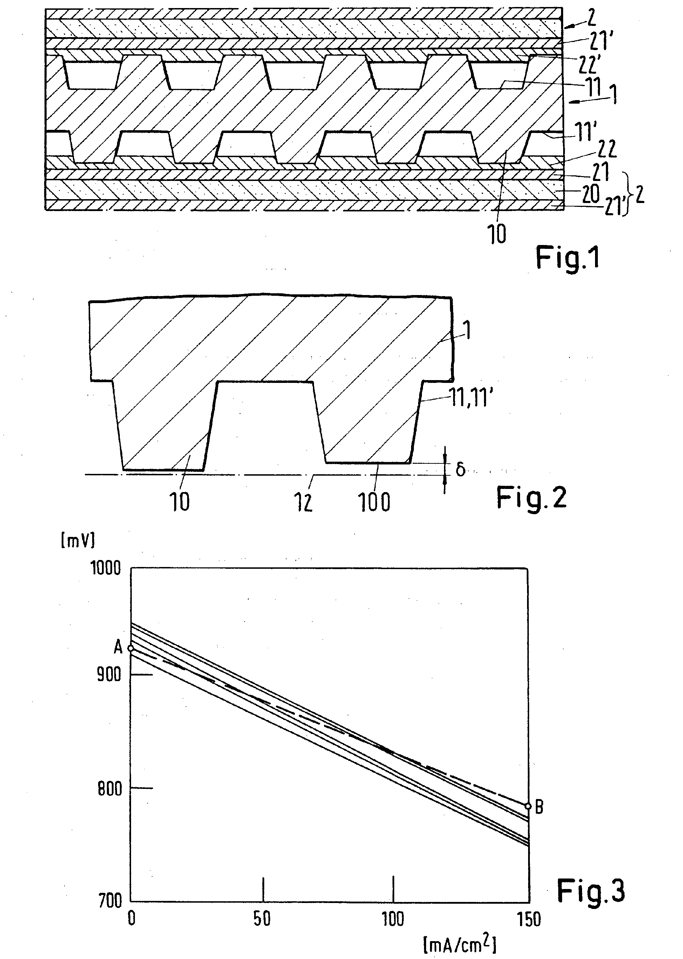

Ein Interkonnektor 1 für eine planare Hochtemperatur-Brennstoffzelle, wie er in den Figuren 1 und 2 ausschnittsweise als Querschnitt dargestellt ist, hat ein luftseitiges Oberflächenprofil 11 und ein gasseitiges Oberflächenprofil 11'. Diese Profile 11, 11' weisen auf Erhebungen 10 Kontaktflächen 100 auf. Die Erhebungen 10 spannen mit den Kontaktflächen 100 jeweils angenähert eine Ebene 12 auf. Abweichungen δ der Kontaktflächen 100 von den Ebenen 12 liegen innerhalb einer vorgegebenen Toleranz. Es bestehen an den Kontaktflächen 100 Kontaktierungen zwischen dem Interkonnektor 1 und benachbarten PEN-Elementen 2.

Beim erfindungsgemässen Verfahren wird jeweils auf Elektroden 21 bzw. 21' der PEN-Elemente 2 (d.h. der elektrochemisch aktiven Scheiben 2 mit einer zentralen Festoxidschicht 20) eine Schicht 22 bzw. 22' aufgetragen, die aus einem Kontaktiergemisch besteht. Dieses Gemisch enthält elektrisch leitende Partikel und ein die Partikel einbettendes Medium. Dieses Medium ist eine Heissschmelzmasse, die bei Raumtemperatur und insbesondere bei einer Temperatur unter 40 °C fest ist. Bei einer geeigneten Arbeitstemperatur befindet sich die Heissschmelzmasse in einem flüssigen oder plastischen Zustand. Statt auf die Elektroden 21, 21' kann das Kontaktiergemisch auch auf die Kontaktflächen 100 aufgetragen werden.

Die Oberflächenprofile 11, 11' (bzw. Elektroden 21, 21') werden so mit der aufgetragenen Schicht 22 bzw. 22' in Berührung gebracht, dass bei der genannten Arbeitstemperatur die Erhebungen 10 in diese Schicht 22, 22' eindringen. Es werden so zwischen den Kontaktflächen 100 und den elektrisch leitenden Partikeln Verbindungen und damit diskrete, homogen strukturierte Verbindungen zwischen den Kontaktflächen 100 und den Elektroden 21, 21' ausgebildet. Schliesslich wird das die Partikel einbettende Medium bei Aufrechterhaltung der diskreten Verbindungen thermisch entfernt und Sinterverbindungen zwischen den Partikeln sowie zwischen Partikeln und den Kontaktflächen 100 hergestellt.

Heissschmelzmassen sind bei Raumtemperatur feste, viskoelastische oder viskoplastische organische Werkstoffe vorzugsweise auf der Basis von Harzen, natürlichen und synthetischen Wachsen, Thermoplasten, höherkettige Alkoholen und Carbonsäuren (z. B. Stearinsäure, Palmitinsäure). Die Heissschmelzmasse geht beim Erwärmen in eine zäh- oder dünnflüssige Schmelzen über; sie erfährt also eine Aggregatzustandsänderung. Der Schmelzpunkt der Heissschmelzmasse liegt insbesondere im Bereich zwischen 40 und 80 °C. In der Regel lässt sich mit zusätzlich zugemischten Additivstoffen eine homogene Verteilung der elektrisch leitenden Partikel erzeugen.

Die elektrisch leitenden Partikel werden mit der Heissschmelzmasse in geheizten Vorrichtungen zu einer homogenen Paste vermischt. Dabei werden konventionelle Mischvorrichtungen wie beispielsweise Kugelmühlen, Rührwerke und/oder statische Mischer verwendet.

Die elektrisch leitenden Partikel sind aus dem gleichen oder einem ähnlichen Material wie ein Elektrodenmaterial der zu kontaktierenden Elektrode gebildet, vorzugsweise metallische Leiter. Das Elektrodenmaterial einer Anode (gasseitige Elektrode 21) unterscheidet sich von jenem einer Kathode (luftseitige Elektrode 21'). Beispielsweise NiO/YSZ Mischungen (YSZ: mit Yttrium stabilisiertes Zirkon) für die Anode; LaSrMe-Pervskite (LaSr)(Me)O₃, mit Me: Co, Mn, Ni, Cr und/oder Fe, (bevorzugt (Mn, Co)) für die Kathode.

Ein Beispiel für die Pastenherstellung: Anodenpulver, 100 g / Stearinsäure, 16.2 g / Additiv (Beycostat C213), 2.7 g.

Das Kontaktiergemisch wird beispielsweise als Schlicker oder Paste bei einer Temperatur beim oder über dem Schmelzpunkt der Heissschmelzmasse mittels eines Roll-, Spritz-, Giess- oder Druckverfahrens, insbesondere Siebdruckverfahrens, gleichmässig auf die Elektroden 21, 21' aufgebracht. Unmittelbar nach dem Aufbringen verfestigt sich das Kontaktiergemisch zu der Schicht 22, 22'.

Die aus dem Kontaktiergemisch gebildeten Schichten können auch separat hergestellte Folien sein, die bei einer Montage zwischen die Interkonnektoren 1 und die PEN-Elemente 2 eingelegt werden. Die Folien lassen sich mittels Foliengiessen oder Kalendrieren erzeugen.

Beim erfindungsgemässen Verfahren werden die Interkonnektoren 1 und PEN-Elemente 2 in alternierender Anordnung und längs einer Stapelachse zu einem Stapel zusammengebaut. Dieser Stapel wird in einer Montageeinrichtung auf die Arbeitstemperatur von beispielsweise 70 °C gleichmässig erwärmt (Beim vorbekannten Verfahren mit feuchter Paste ist die Arbeitstemperatur gleich der Raumtemperatur). Mittels einer nachstellenden Verspannung der Montageeinrichtung, die gleichmässig eine konstante oder auch variable Presskraft in Richtung der Stapelachse ausübt, werden die diskreten Verbindungen erzeugt, wobei die Stapelhöhe sich um 3 bis 10 % verringert. Schliesslich wird die Heissschmelzmasse - vorzugsweise unter einer Aufrechterhaltung der Presskraft - thermisch entfernt, insbesondere ausgebrannt, und gleichzeitig oder in einem weiteren Schritt die Sinterverbindungen hergestellt.

Die aus dem Kontaktiergemisch gebildete Schicht oder Folie hat eine Dicke im Bereich zwischen 30 und 300 µm, vorzugsweise 50 und 200 µm.

Die Brennstoffzellen sind bei einer bevorzugten Ausführungsform der Brennstoffzellenbatterie kreisförmig. Eine derartige Brennstoffzellenbatterie ist beispielsweise aus der EP-A- 1 075 033 bekannt. Der zylindrische Zellenstapel enthält einen zentralen Gasverteilkanal. An der Stapelperipherie sind axial ausgerichtete Nachverbrennungsräume angeordnet, die seitlich durch für die Luftverteilung vorgesehene Kanälen getrennt sind.

In Fig. 3 stellt ein Diagramm gemessene Zellspannungen eines Stapels von fünf Zellen dar, in denen eine Kontaktierung gemäss dem Stand der Technik durchgeführt worden ist. Die individuellen Zellspannungen, die bei solchen "Stackversuchen" gemessen worden sind, sind in Abhängigkeit von der Stromdichte bei variabler Last dargestellt (Leerlauf bei 0 mA/cm², mittlere Leistungsabgabe bei rund 100 mA/cm²). Es sind keine einzelnen Messpunkte angegeben, sondern nur Geraden (fünf entsprechend der gewählten Anzahl der Zellen), die mit guter Näherung statistisch ausgewertete Messdaten wiedergeben. Eine inhomogene Kontaktierung bei diesem Stackversuch bewirkt eine relativ breite Streuung der individuellen Zellspannungen (verschiedene Verläufe der Strom-Spannungskurven) und damit des flächenspezifischen Zellenwiderstands. Der ohmsche Verlust des Stapels ist folglich höher als bei einer homogenen Kontaktierung.

Die gestrichelte Verbindungslinie zwischen den Punkten A und B in Fig. 3 zeigt die Zellspannungen (nur eine Gerade, praktisch identische Verläufe der Strom-Spannungskurven), die für einen Stapel gemessen worden sind, dessen Kontaktierungen erfindungsgemäss durchgeführt sind und folglich die angestrebte Homogenität aufweisen. In einer Brennstoffzellenbatterie mit erfindungsgemässen Kontaktierungen sind also bei deren Betrieb alle Zellspannungen praktisch gleich gross. Statistische Auswertungen der Stackversuche zeigen, dass der flächenspezifische Zellenwiderstand (ASR: "Area Specific Resistance") bei der Anwendung des erfindungsgemässen Verfahrens sich um rund 15 % verringert. Der Mittelwert des ASR sinkt von rund 1.4 Ωcm² (inhomogene Kontaktierung) auf 1.2 Ωcm². Durch die verbesserte Kontaktierung hat sich eine signifikante Leistungssteigerung ergeben.

Weitere Vorteile der erfindungsgemässen Kontaktierung:
- Die Stapelmontage vereinfacht sich, da keine feuchten Pasten gehandhabt werden müssen (keine Gefahr von Kurzschluss der Elektrodendurch überschüssigen Kontaktschlicker, kein vorzeitiges Eintrocknen, keine Verschmutzungsgefahr, kein Bereitstellen von beschichteten Stapelkomponenten bei Verwendung von folienförmigen Kontaktiergemischen).
- Zur Trennung von Luft- und Gasströmen werden in den planaren Brennstoffzellenbatterien Dichtungen aus Glas- oder Glaskeramiklot verwendet. Dieses Dichtungsmaterial kann ebenfalls in Pastenform aufgetragen werden. Die Herstellung der Dichtungen kann somit gut mit dem erfindungsgemässen Verfahren kombiniert werden.
- Bei Brennstoffzellen nach dem Stand der Technik ist es erforderlich, auf der Anodenseite ein feines Nickeldrahtgewebe (Ni-Mesh) vorzusehen. Dieses Erfordernis fällt nun weg.
- Durch die auf die Elektroden aufgebrachten Kontaktierschichten erhöhen sich die elektrische und thermische Querleitfähigkeiten.

Mit der erfindungsgemäss hergestellten Kontaktierungen erhält man eine Brennstoffzellenbatterie, für die bei Betrieb alle Zellspannungen praktisch gleich gross sind. Eine solche erfindungsgemässe Brennstoffzellenbatterie umfasst einen Zellenstapel, insbesondere einen zylindrischen Stapel mit kreisförmigen Zellen, der einen zentralen Gasverteilkanal enthält. An der Stapelperipherie sind axial ausgerichtet Nachverbrennungsräume und Luftverteilkanäle angeordnet.

## Patentansprüche

1. Verfahren zum Herstellen von Kontakten zwischen elektrochemisch aktiven Scheiben (2) und Interkonnektoren (1) in planaren Hochtemperatur-Brennstoffzellen, deren Interkonnektoren luftseitige und gasseitige Oberflächenprofile (11, 11') mit Kontaktflächen (100) auf Erhebungen (10) aufweisen, wobei die Erhebungen jedes Oberflächenprofils angenähert eine Ebene (12) mit den Kontaktflächen aufspannen und dabei Abweichungen (δ) innerhalb einer vorgegebenen Toleranz liegen,
bei welchem Verfahren jeweils auf Elektroden (21, 21') der elektrochemisch aktiven Scheiben oder auf die Kontaktflächen eine Schicht (22, 22') aufgetragen wird, die aus einem Kontaktiergemisch besteht, das elektrisch leitende Partikel und ein die Partikel einbettendes Medium enthält, dass die Oberflächenprofile bzw. die Elektroden so mit der aufgetragenen Schicht in Berührung gebracht werden, dass bei einer Arbeitstemperatur die Erhebungen in diese Schicht eindringen und so zwischen den Kontaktflächen und den elektrisch leitenden Partikeln Verbindungen und damit diskrete, homogen strukturierte Verbindungen zwischen den Kontaktflächen und den Elektroden ausgebildet werden, und dass schliesslich das die Partikel einbettende Medium thermisch entfernt und die diskreten Verbindungen verfestigt werden,
**dadurch gekennzeichnet, dass** das die Partikel einbettende Medium eine Heissschmelzmasse ist, die bei Raumtemperatur und insbesondere bei einer Temperatur unter 40 °C fest ist und dass bei der genannten Arbeitstemperatur der Heissschmelzmasse sich in einem flüssigen oder plastischen Zustand befindet.

2. Verfahren nach Anspruch 1, **dadurch gekennzeichnet, dass** als Heissschmelzmasse bei Raumtemperatur feste, viskoelastische oder viskoplastische organische Werkstoffe vorzugsweise auf der Basis von Harzen, natürlichen und synthetischen Wachsen, Thermoplasten, höherkettige Carbonsäuren und Alkoholen, die beim E wärmen in Schmelzen übergehen, verwendet werden, und dass der Schmelzpunkt der Heissschmelzmasse insbesondere im Bereich zwischen 40 und 80 °C liegt.

3. Verfahren nach Anspruch 1 oder 2, dadurch gekennze chnet, dass die elektrisch leitenden Partikel mit der Heissschmelzmasse in geheizten Vorrichtungen zu einer homogenen Paste vermischt werden, wobei konventionelle Mischvorrichtungen wie beispielsweise Kugelmühlen, Rührwerke und/oder statische Mischer verwendet werden.

4. Verfahren nach einem der Ansprüche 1 bis 3, **dadurch gekennzeichnet, dass** die elektrisch leitenden Partikel aus dem gleicher Material wie ein Elektrodenmaterial der zu kontaktierenden Elektrode gebildet sind, wobei das Elektrodenmaterial einer Anode sich von jenem einer Kathode unterscheidet.

5. Verfahren nach einem der Ansprüche 1 bis 4, **dadurch gekennzeichnet, dass** bei einer Temperatur beim oder über dem Schmelzpunkt der Heissschmelzmasse das Kontaktiergemisch als Schlicker oder Paste mittels eines Roll-, Spritz-, Giess- oder Druckverfahrens, insbesondere Siebdruckverfahrens, gleichmässig auf die Elektroden aufgebracht wird, wobei unmittelbar nach dem Aufbringen das Kontaktiergemisch sich zu der Schicht verfestigt.

6. Verfahren nach einem der Ansprüche 1 bis 4, **dadurch gekennzeichnet, dass** die aus dem Kontaktiergemisch gebildeten Schichten separat hergestellte Folien sind, die bei einer Montage zwischen die Interkonnektoren (1) und die elektrochemisch aktiven Scheiben eingelegt werden, wobei die Folien mittels Foliengiessen oder Kalendrieren erzeugt werden können.

7. Verfahren nach einem der Ansprüche 1 bis 6, **dadurch gekennzeichnet, dass** in alternierender Anordnung und längs einer Stapelachse die Interkonnektoren (1) und die elektrochemisch aktiven Scheiben zu einem Stapel zusammengebaut werden, dass dieser Stapel in einer Montageeinrichtung auf die Arbeitstemperatur gleichmässig erwärmt wird, dass mittels einer nachstellenden Verspannung der Montageeinrichtung, die gleichmässig eine konstante oder variable Presskraft in Richtung der Stapelachse ausübt, die diskreten Verbindungen unter einer Verringerung der Stapelhöhe um 3 bis 10% hergestellt werden und dass schliesslich die Heissschrnelzmasse, vorzugsweise unter einer Aufrechterhaltung der Presskraft, thermisch entfernt, insbesondere ausgebrannt, wird.

8. Verfahren nach einem der Ansprüche 1 bis 7, **dadurch gekennzeichnet, dass** die aus dem Kontaktiergemisch gebildete Schicht oder Folie eine Dicke im Bereich zwischen 30 und 300 µm, vorzugsweise 50 und 200 µm hat.

9. Brennstoffzellenbatterie mit planaren Hochtemperatur-Brennstoffzellen, die elektrochemisch aktiven Scheiben und Interkonnektoren enthalten, wobei die die elektrochemisch aktiven Scheiben Elektroden und die Interkonnektoren luftseitige und gasseitige Oberflächenprofile (11, 11') mit Kontaktflächen (100) auf Erhebungen (10) aufweisen, und wobei diskrete, homogen strukturierte Verbindungen zwischen den Kontaktflächen und den Elektroden ausgebildet sind, **dadurch gekennzeichnet, dass** die Verbindungen nach einem Verfahren gemäss einem der Ansprüchen 1 bis 8 hergestellt sind so dass in der Brennstoffzellenbatterie bei deren Betrieb die Streuung der Zellspannungen gegenüber dem Stand der Technik vermindert ist.

10. Brennstoffzellenbatterie nach Anspruch 9, **dadurch gekennzeichnet, dass** die Zellen einen Stapel bilden, insbesondere einen zylindrischen Stapel mit kreisförmigen Zellen, der einen zentralen Gasverteilkanal enthält, und dass an der Stapelperipherie axial ausgerichtet Nachverbrennungsräume und Luftverteilkanäle angeordnet sind.

## Claims

1. A method for the manufacture of contacts between electrochemically active discs (2) and interconnectors (1) in planar high temperature fuel cells, the interconnectors of which have air-side and gas-side surface profiles (11, 11') with contact surfaces (100) on raised portions (10), with the raised portions of each surface profile having the contact surfaces approximately spanning a plane (12) and with deviations (δ) in this arrangement lying within a predetermined tolerance,
in which method a layer is respectively applied onto the electrodes (21, 21') of the electrochemically active discs, or onto the contact surfaces, with the layer consisting of a contact mixture which contains electrically conductive particles and a medium embedding the particles, the surface profiles and/or the electrodes are brought into contact with the applied layer at a working temperature so that the raised portions penetrate into this layer and thus connections are formed between the contact surfaces and the electrically conductive particles and thus discrete homogenously structured connections are formed between the contact surfaces and the electrodes, and finally the medium embedding the particles is removed under thermal part treatments and the discrete connections are solidified, **characterized in that** the medium embedding the particles is a hot melting composition which is solid at room temperature and in particular at a temperature below 40°C and **in that**, at the said working temperature, the hot melting composition is present in a liquid or plastic state.

2. A method in accordance with claim 1, **characterized in that** viscoelastic or visco-plastic organic materials, which are solid at room temperature, preferably on the basis of resins, natural and synthetic waxes, thermoplastic materials, higher chain carboxylic acids and alcohols, which transfer on heating into melt, are used as the hot melting composition and **in that** the melting point of the hot melting composition lies in particular in the range between 40 and 80°C.

3. A method in accordance with claim 1 or claim 2, **characterized in that** the electrically conductive particles are mixed with the hot melting composition in heated apparatus to form a homogeneous paste, with conventional mixing devices such as for example ball mills, stirring mechanisms and/or static mixers being used.

4. A method in accordance with any one of the claims 1 to 3, **characterized in that** the electrically conductive particles are formed of the same material or of a similar material as an electrode material of the electrode to be contacted, with the electrode material of an anode differing from that of a cathode.

5. A method in accordance with one of the claims 1 to 4, **characterized in that** at a temperature at or above the melting point of the hot melting composition the contacting mixture is applied uniformly onto the electrodes as a slip or paste by means of a rolling process, a spraying process, a casting process or a printing process, in particular a screen printing process, with the contacting mixture being solidified to form the layer directly after the application.

6. A method in accordance with any one of the claims 1 to 4, **characterized in that** the layers formed from the contact mixture are separately manufactured foils which are inserted during assembly between the interconnectors (1) and the electrochemically active discs, wherein the foils can be produced by means of foil casting or calandering.

7. A method in accordance with any one of the claims 1 to 6, **characterized in that** the interconnectors (1) and the electrochemically active discs are assembled into a stack in an alternating arrangement and along a stacking axis, with this stack being uniformly heated in an assembly apparatus to the working temperature; **in that** by means of a follow-up clamping of the assembly apparatus, which uniformly exerts a constant or variable pressing force in the direction of a stack axis, the discrete connections are produced with a reduction of the stack height by 3 to 10 % and **in that** finally the hot melting composition is thermally removed, in particular burned out, preferably while maintaining the pressing force.

8. A method in accordance with one of the claims 1 to 7, **characterized in that** the layer or foil formed from the contact mixture has a thickness in the range between 30 and 300 µm, preferably between 50 and 200 µm.

9. A fuel cell battery having planar high temperature fuel cells which fuel cells include electrochemically active discs and interconnectors, wherein the electrochemically active discs have electrodes and the interconnectors have air-side and gas-side surface profiles (11, 11') with contact surfaces (100) on raised portions (10), and wherein discrete homogenously structured connections are formed between the contact surfaces and the electrodes, **characterized in that** the contacts are manufactured in accordance with the method in accordance with one of the claims 1 to 8, so that the distribution of the cell voltages is reduced in the fuel cell battery during its operation in comparison to the state of the art.

10. A fuel cell battery in accordance with claim 9, **characterized in that** the cells form a stack, in particularly a cylindrical stack with circular cells, which contains a central gas distribution passage and **in that** axially aligned afterburning spaces and air distribution passages are arranged at the periphery of the stack.

## Revendications

1. Procédé pour réaliser des contacts entre des disques électrochimiquement actifs (2) et des interconnecteurs (1) dans des cellules à combustible planes à haute température, dont les interconnecteurs présentent des profils de surface (11, 11') côté air et côté gaz dotés de surfaces de contact (100) sur des bossages (10), sachant que les bossages de chaque profil de surface sous-tendent approximativement un plan (12) par les surfaces de contact et que les écarts (δ) se situent dans une plage de tolérance prédéfinie,
procédé selon lequel une couche (22, 22'), constituée d'un mélange de mise en contact contenant des particules électroconductrices et un milieu incorporant les particules, est appliquée sur des électrodes respectives (21, 21') des disques électrochimiquement actifs ou sur les surfaces de contact, selon lequel les profils de surface ou les électrodes sont mis en contact avec la couche appliquée de telle sorte qu'à une température de travail, les bossages pénètrent dans cette couche et des liaisons sont ainsi créées entre les surfaces de contact et les particules électroconductrices, et par suite des liaisons discrètes à structure homogène entre les surfaces de contact et les électrodes, et selon lequel enfin le milieu incorporant les particules est thermiquement enlevé et les liaisons discrètes sont solidifiées,
**caractérisé en ce que** le milieu incorporant les particules est une masse thermofusible qui est solide à la température ambiante et notamment à une température inférieure à 40 °C, et **en ce que** la masse thermofusible se trouve dans un état liquide ou plastique à la température de travail précitée.

2. Procédé selon la revendication 1, **caractérisé en ce qu'**on utilise comme masse thermofusible des matériaux organiques solides, viscoélastiques ou viscoplastiques à température ambiante, de préférence à base de résines, de cires naturelles ou synthétiques, de thermoplastiques, d'alcools et d'acides carboxyliques à longue chaîne, qui fondent lorsqu'ils sont chauffés, et **en ce que** le point de fusion de la masse thermofusible se situe notamment entre 40 et 80 °C.

3. Procédé selon la revendication 1 ou 2, **caractérisé en ce que** les particules électroconductrices sont, dans des dispositifs chauffés, mélangées avec la masse thermofusible pour former une pâte homogène, sachant qu'on utilise des dispositifs mélangeurs classiques comme par exemple des broyeurs à billes, des agitateurs, et/ou des mélangeurs statiques.

4. Procédé selon l'une des revendications 1 à 3, **caractérisé en ce que** les particules électroconductrices sont formées du même matériau qu'un matériau d'électrode de l'électrode à mettre en contact, sachant que le matériau d'électrode d'une anode se différencie de celui d'une cathode.

5. Procédé selon l'une des revendications 1 à 4, **caractérisé en ce que**, à une température égale ou supérieure au point de fusion de la masse thermofusible, le mélange de mise en contact est appliqué uniformément sous forme de suspension ou de pâte sur les électrodes au moyen d'un procédé de roulage, de projection, de coulage ou d'impression, en particulier un procédé de sérigraphie, sachant que le mélange de mise en contact se solidifie juste après son application pour former la couche.

6. Procédé selon l'une des revendications 1 à 4, **caractérisé en ce que** les couches formées à partir du mélange de mise en contact sont des feuilles séparément fabriquées qui sont insérées lors du montage entre les interconnecteurs (1) et les disques électrochimiquement actifs, sachant que les feuilles peuvent être produites par coulage de feuilles ou par calandrage.

7. Procédé selon l'une des revendications 1 à 6, **caractérisé en ce que** les interconnecteurs (1) et les disques électrochimiquement actifs sont assemblés pour former une pile, en disposition alternée et le long d'un axe de pile, **en ce que** cette pile est, dans un dispositif de montage, chauffée uniformément à la température de travail, **en ce que**, au moyen d'un serrage consécutif du dispositif de montage qui exerce uniformément une force de pression constante ou variable en direction de l'axe de la pile, les liaisons discrètes sont créées avec une réduction simultanée de la hauteur de la pile de 3 à 10%, et **en ce que**, enfin, la masse thermofusible est thermiquement enlevée, notamment est brûlée, tout en maintenant la force de pression.

8. Procédé selon l'une des revendications 1 à 7, **caractérisé en ce que** la couche ou feuille formée à partir du mélange de mise en contact possède une épaisseur comprise entre 30 et 300 µm, de préférence entre 50 et 200 µm.

9. Batterie de cellules à combustible comprenant des cellules à combustible planes à haute température qui contiennent des disques électrochimiquement actifs et des interconnecteurs, sachant que les disques électrochimiquement actifs présentent des électrodes et les interconnecteurs des profils de surface (11, 11') côté air et côté gaz dotés de surfaces de contact (100) sur des bossages (10), et sachant que des liaisons discrètes à structure homogène sont créées entre les surfaces de contact et les électrodes, **caractérisée en ce que** les liaisons sont réalisées d'après un procédé selon l'une des revendications 1 à 8, de sorte que, dans la batterie de cellules à combustible, lors de son fonctionnement, la dispersion des tensions des cellules est réduite par rapport à l'état de la technique.

10. Batterie de cellules à combustible selon la revendication 9, **caractérisée en ce que** les cellules forment une pile, en particulier une pile cylindrique ave des cellules circulaires qui contient un canal central de distribution de gaz, et **en ce que** des chambres de postcombustion et des canaux de distribution d'air sont disposés sur la périphérie de la pile en étant orientés axialement.
